# EUROPEAN PATENT APPLICATION

(11) **EP 2 501 113 A1**
(43) Date of publication of application: **19.09.2012**
(21) Application number: 12159199.4
(22) Date of filing: 13.03.2012
(51) Int. Cl.: H04M 1/24, H04M 3/30

(54) **Phone test set TDR**

(30) Priority: 15.03.2011 US 201113048372; 15.03.2011 US 201113048835
(71) Applicant: Fluke Corporation, Everett, WA 98203 (US)
(72) Inventor: Paul, Alexander, Colorado Springs Colorado 80924 (US)
(74) Representative: Klunker . Schmitt-Nilson . Hirsch

(57) **Abstract**

A phone test set provides TDR capability in a hand held device, enabling measurements on phone lines including, distance to opens, distance to shorts, and distance to bridge taps.

## Description

### Background of the Invention

This invention relates to test and measurement data communications and more particularly to a phone test set TDR apparatus and method.

Communications field service technicians in the telephone industry use a test instrument called a phone test set or lineman's handset, also called a butt set. The phone test set typically comprises ear and mouthpieces and keyboard for dialing input. Some models include alphanumeric displays.

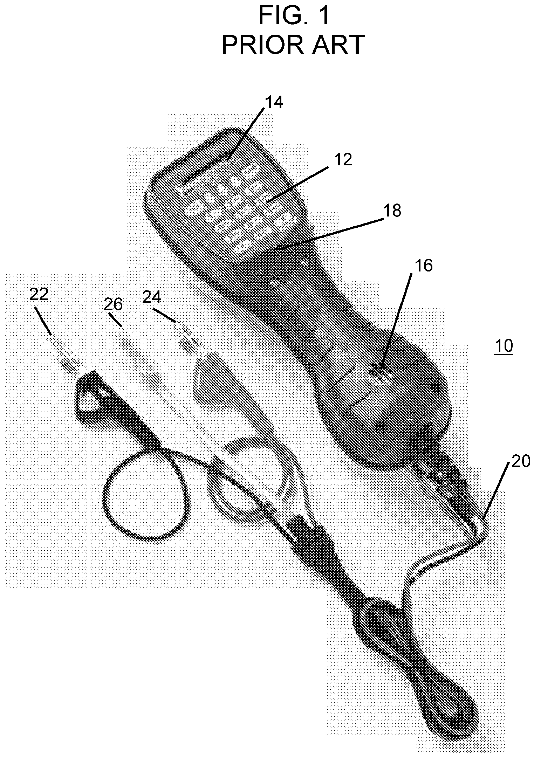

The test set is used by the technician in the installation and troubleshooting of analog phone systems. FIG. 1 is a view of a contemporary phone test set 10 which is a hand held device comprising an input keypad 12 and alphanumeric display 14. Microphone 18 and speaker 16 enable the technician to speak and listen to use the device as a telephone. Cables 20 connect alligator clips 22, 24 and modular plug 26 to the test set to enable connection to telephone wiring of the phone systems under test. The test set typically will include features such as caller ID and call waiting caller ID. What has been missing from phone test sets is Time Domain Reflectometry (TDR) capability for enabling both verification of phone operation and diagnosis of line length or breaks with the same piece of test equipment.

TDR is a method of determining physical properties of an electromagnetic or acoustic transmission medium. Energy is transmitted to the transmission medium, where the transmitted energy can be light (Optical TDR - used in fiber optic cables) or sound (to find voids, hollows, depth, etc of material capable of transmitting sound), RADAR (distance through air or free space to some object using radio waves) or electrical (transmission through an electrical transmission line such as a single wire, a differential pair of wires, coaxial cable, etc.).

### Summary of the Invention

In accordance with the invention, a phone test set is provided with TDR functionality to enable testing on telephone lines to determine telephone line lengths to opens and shorts.

Accordingly, it is an object of the present disclosure to provide an improved phone test set with TDR.

It is a further object of the present disclosure to provide an improved phone test set apparatus providing TDR and determination of what types of signals are on the telephone line under test and whether TDR testing can or should be performed.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

### Brief Description of the Drawings

FIG. 1 is a view of a contemporary phone test set
FIG. 2 is a block diagram of a phone test set in accordance with the present disclosure;
FIG. 3 is a block diagram of details of TDR block 34 of FIG. 2;
FIG. 4 is a flow chart of operational steps in a first mode checking for voltage or data present on the line before TDR testing;
FIG. 5 is a flow chart of operational steps in a second mode checking for voltage or data present on the line before TDR testing;
FIG. 6 is a flow chart of operational steps in a third mode supporting ANAC operation; and
FIG. 7 is a view of a hand held phone test set with TDR in accordance with the disclosure herein.

### Detailed Description

The system according to a preferred embodiment of the present disclosure comprises a phone test set system and method providing TDR capabilities to enable the test set to have TDR (Time Domain Reflectometry) functions and capabilities, including front end protection and intelligence to differentiate what type of signals are on the telephone line and if TDR can/should be performed.

TDR is applied to telephone cabling, typically a twisted pair of insulated wires, which will have a reasonably well known set of characteristics for a well functioning cable. Anomalies that might interfere with proper transmission of voice or data may be found using TDR, where, in accordance with the present disclosure, a ruggedized telephone, formally referred to as a "Craft Person's Test Set", used by telephone installation and repair technicians, generally in the field or customers premise, is provided with TDR capabilities and methods. The Craft Person's Test Set is a telephone, and more recently a smart telephone capable of measuring a variety of parameters of the telephone line under test.

TDR is added in accordance with the invention to further enhance the telephone technician's ability to troubleshoot anomaly in the line under test or help verify the line is good.

The device provides:

The ability to measure the voltage and phone operation on the line (if the line is powered, the device can validate phone operation and determine to not perform TDR).

The ability to switch between the telephone function and the TDR function.

Overvoltage and overcurrent protection (in case the unpowered line becomes powered during the test)

ESD protection for the receive amplifier, providing static protection of the receiver electronics portion.

Compensated attenuator, wave shaping and attenuation to match input characteristics of the receive amplifier.

A processor provides highly accurate differential time measurements (used for measuring the difference in time between the asynchronous and synchronized time pulses). Alternatively, other methods, separate circuitry can be provided to accomplish this.

Analysis of the data collected allows the algorithm to deduce and display to the operator of the device the distance to anomaly in the network.

Anomalies may include an open (end of the transmission line), a short (a common fault due to physical damage of the line under test), a split pair (or bridge tap) where a second twisted pair transmission line has been spliced into the line under test. Other anomalies can also be deduced, but these noted above are those that are the primary concern areas for the telephone technician.

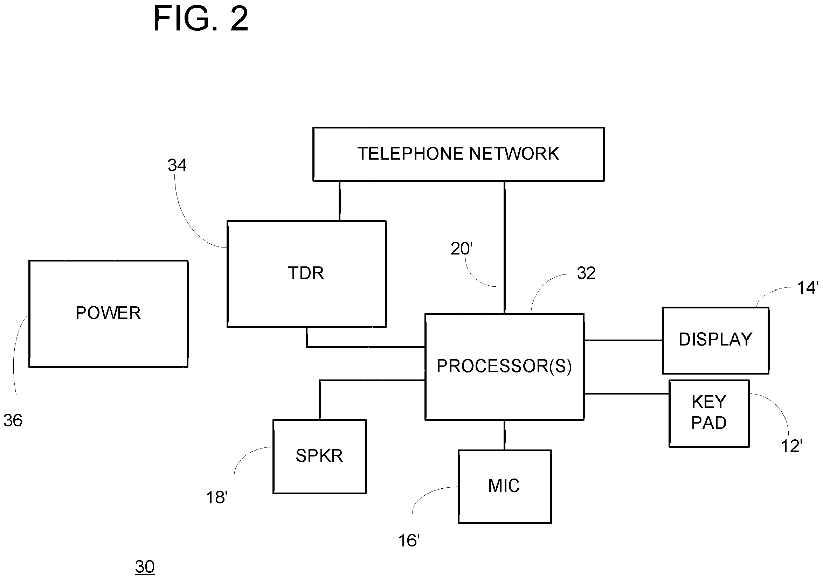

FIG. 2 is a block diagram of a phone TDR test set in accordance with the present disclosures. The test set 30 employs a processor(s) 32 interfacing with keypad 12', display 14', microphone 16', speaker 18' and interface cables 20' for connection to a phone network. TDR block 34 includes interface with the processors and phone network for sending and receiving stimulus on the phone network and interacting with the processor for control and data analysis. Power block 36 provides operational power to the device, and may comprise battery power, or line power, for example. The power block may comprise supply of different characteristics of power as the various components may not all of which have the same power requirements.

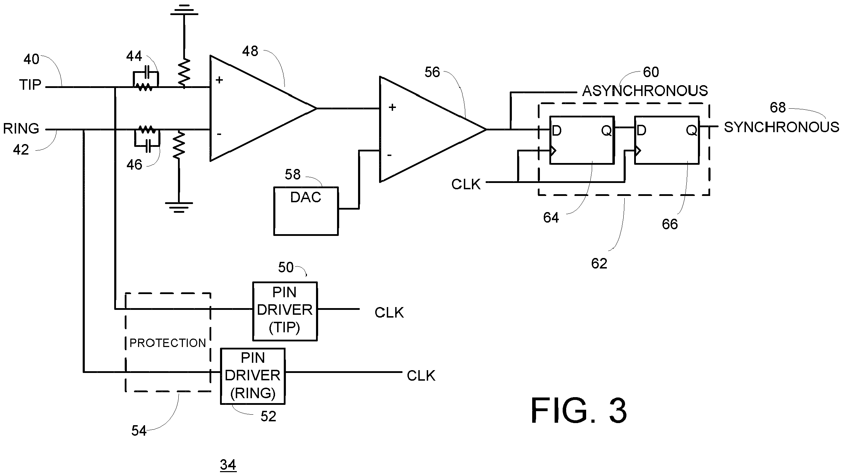

FIG. 3 is a block diagram of details of TDR block 34 of FIG. 2, wherein tip 40 is supplied via compensated attenuator 44 to the "+" input of high speed differential-to-single-ended amplifier 48 and ring 42 is supplied via compensated attenuator 46 to the "-" input of amplifier 48. Pin drivers 50 and 52 transmit the energy to be reflected and measured by the network under test to tip 40 and ring 42, respectively, synchronous to a clock also used in the receiver electronics. Protection circuitry 54 may also be provided between the pin drivers and the tip and ring lines.

The high speed differential-to-single-ended amplifier 48 amplifies the energy on the telephone line pair under test (inherently a differential signal as there are two wires neither of which is normally connected to ground), converts its level and translates it to a single ended signal, which is provided as "+" input to high speed comparator 56, while DAC 58 (digital to analog converter) provides the "-" input to comparator 56. The DAC 58 sets the voltage level at which the comparator output will transition, providing asynchronous output 60.

The output of the comparator is also provided as input to synchronizing circuit 62, suitably comprising two flip flops 64, 66 which are synchronous to the same clock that controls the output pin drivers 50, 52. Synchronizing circuit 62 converts the asynchronous output from the comparator to a synchronous output 68. The difference in time between the asynchronous output and the synchronous output, less one clock cycle, is the residual (fraction of a clock) time used in calculations to enhance the precision of the measurement.

The primary clock that the flip flops and pin drivers use also operates a synchronous counter that counts clock edges from the time of launching the energy from the pin drivers to the network under test.

The DAC that is one of the inputs to the comparator is initially set to a low level and incremented in value slightly for each measurement point. The time delay (timer + residual) is measured by a dual-slope interpolator to measure the coarse time plus the residual time, both of which thereby provide a good precise measurement of the time delay of the energy pulse and it's reflection on the network under test. A full record of data points is thus gathered measuring DAC voltage (therefore the unknown comparator input voltage from the reaction of the stimulus pulse and the complex response of the network under test) vs. the time the signal reached that DAC voltage. Thus, a waveform of time vs. amplitude can be reconstructed using a modestly priced electronic components and software configuration.

Features provided by the device include:

"One Button TDR" on a test set phone for diagnostic testing of line opens and shorts for non-operational phone connections. A single button press (whether a physical button or virtual button via display interface) performs the TDR testing process and reports results thereof.

"One Button Line Qualification" on a test set phone, automatic detection of active line usage for data, phone, or open-short conditions.

"One Button Line Qualification" on a test set phone, automatic detection of active line usage for data, phone, number verification or open-short conditions.

Test Set phone TDR protection to pre-qualify telephone line conditions for TDR operation.

Test Set phone TDR protection in the case unpowered lines become powered during TDR testing.

Checking on TDR open and short detection for toner support for Fluke brand IntelliTone Pro toners, for example, which generate four different analog songs which alternate every time a pair under test is shorted.

"One Button TDR", which performs the TDR test with a single initiation request, such as button press or touch display press.

"One Button Line Qualification", which performs line qualification tests with a single initiation request, such as button press or touch display press.

Test sets are often used for testing and verifying line connections. The "One Button TDR" can also be used to pre-qualifying the line connection for the presence of data (xDSL) or presence of an operating phone line with dial tone connection support. If a connection is not detected, the line can automatically be tested for a break (open) or short and identify the length to the failure condition.

The level of verification TDR, TDR + Data Detect & Voltage, TDR + Data Detect & Voltage & Active Line, TDR + Data Detect & Voltage & Active Line & Number verification can be set in a menu selection by the user.

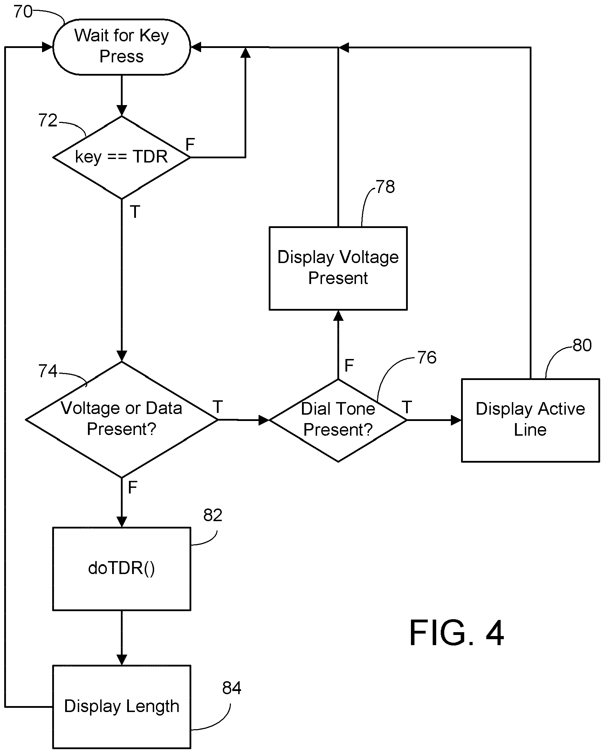

FIG. 4 is a flow chart of operational steps for the device in TDR + Voltage mode, wherein the processor operates the device to wait for a key press (block 70), waiting for the operator to indicate that testing is desired (which may be by pressing a particular key on key pad 12' or selecting an item on a display). Block 72 determines whether the key pressed was the key to indicate TDR. If not, waiting at block 70 continues. If the key was the TDR key, then block 74 decides whether voltage or data is present on the line under test. If voltage or data is present, block 76 determines whether dial tone is present and if so, block 80 indicates (for example by display on display 14'), and operation continues at block 70 waiting for further key presses. If dial tone was not present at block 76, block 78 displays an indication that a voltage is present on the line, processing continuing at block 70. Either dial tone or voltage present on the line (i.e., not a 'dry line') indicates an active line and precludes TDR testing in the present embodiment.

Returning to block 74, if voltage or data were not present, TDR measurement is performed (block 82) and the length measured is displayed (block 84), then returning to block 70 to await further key press.

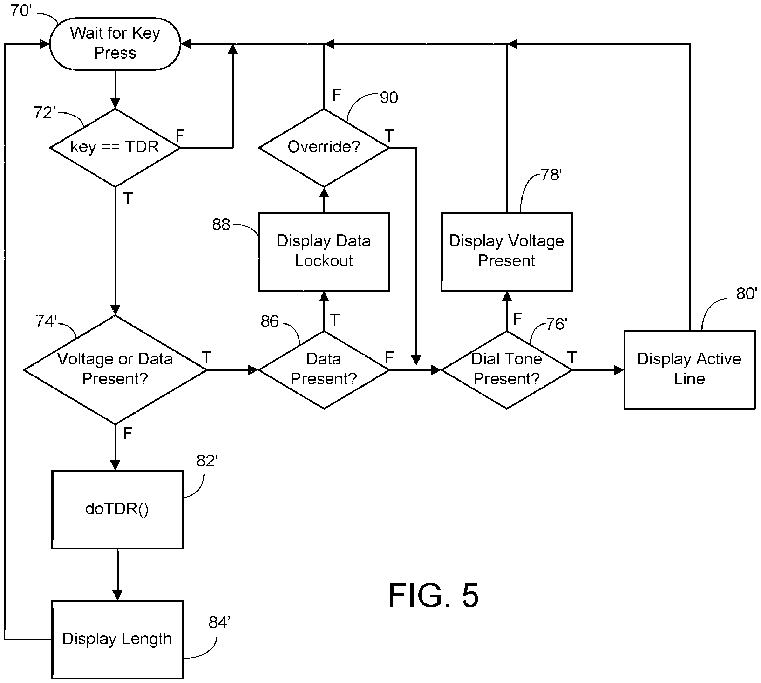

FIG. 5 is a flow chart of operational steps of TDR + Data Detect & Voltage & Active Line mode, wherein the processor operates the device to wait for a key press (block 70'), waiting for the operator to indicate that testing is desired (which may be by pressing a particular key on key pad 12' or selecting an item on a display). Block 72' determines whether the key pressed was the key to indicate TDR. If not, waiting at block 70' continues. If the key was the TDR key, then block 74' decides whether voltage or data is present on the line under test. If voltage or data is present, block 86 determines whether data is present. If FALSE, block 76' determines whether dial tone is present and if so, block 80' indicates (for example by display on display 14') that the phone line is an active line, and operation continues at block 70' waiting for further key presses. If dial tone was not present at block 76', block 78' displays an indication that a voltage is present on the line, processing continuing at block 70'.

Returning to block 86, if data was present, a data lockout display is made (block 88) and a determination is made whether an override was requested (block 90). If no override is requested, operation continues at block 70'. If override was requested, processing continues with block 76', to check for presence of dial tone. Either data, dial tone or voltage present on the line indicates an active line and precludes TDR testing in the present embodiment.

Returning to block 74', if voltage or data were not present, TDR measurement is performed (block 82') and the length measured is displayed (block 84'), then returning to block 70' to await further key press.

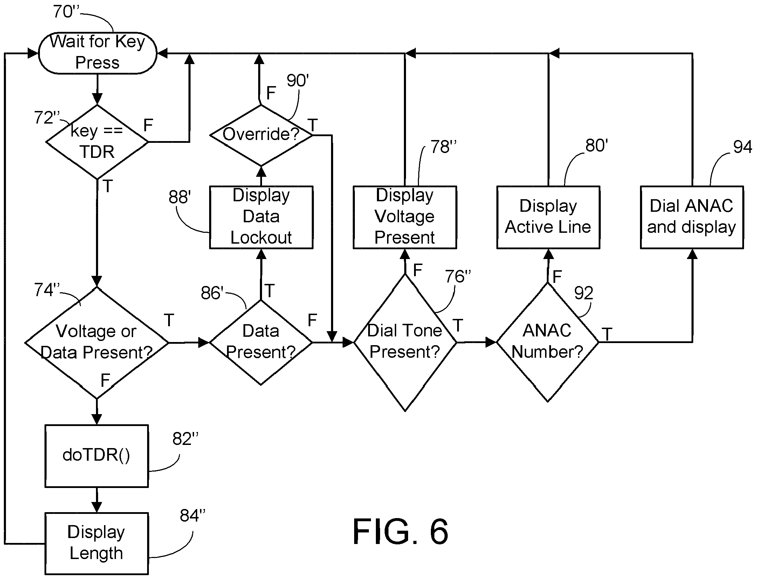

FIG. 6 illustrates a mode of operation where support is provided for automatic dialing of an automatic number announcement circuit (ANAC, a telephone number that is meant to be used by telecommunications technicians to determine the phone number of a particular line, by calling the ANAC telephone number) for number verification if an ANAC number has been added to a storage location. The operation in FIG. 6 has corresponding steps to the operation of FIG. 5, with the change of, at block 76", if dial tone was present, then an additional determination at block 92 is made as to whether an ANAC number is provided to the instrument. If not, active line is displayed (block 80') and processing continues at block 70" . However, if an ANAC number is present, then the ANAC number is called (block 94), and the result of that call is displayed (which would provide an indication of the telephone number of the line to which the test instrument is connected), and processing returns to block 70" to wait for additional test requests.

User interface designs are provided to the phone test set for ease of telephone technician use and the ability to configure TDR test parameters and view results efficiently.

Accordingly TDR testing is provided to the phone test set, in a physical configuration such as the test set of FIG. 1, for example, enabling the phone test set to operate as a an enhanced testing device for communication technicians.

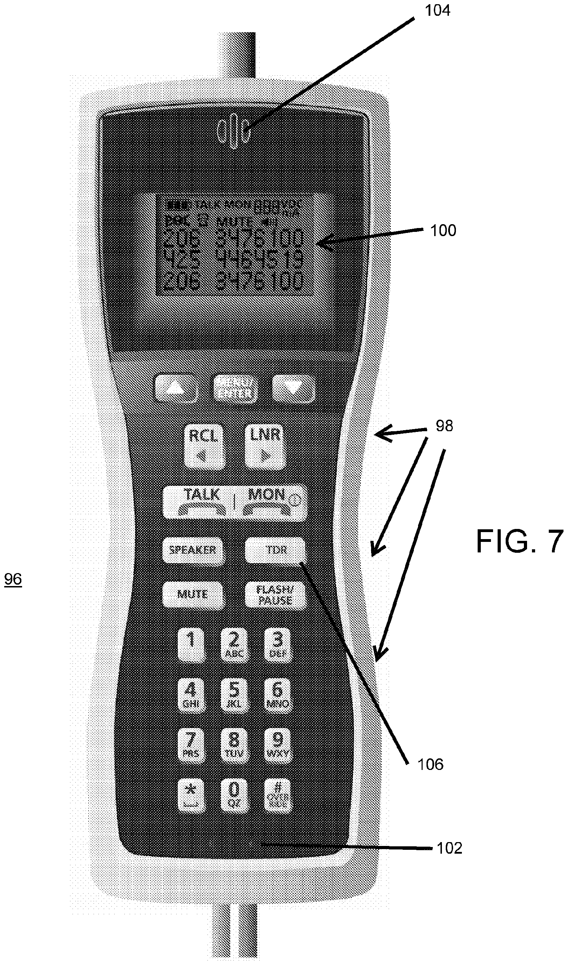

FIG. 7 is a view of a hand held phone test set with TDR in accordance with the disclosure herein, wherein the test set 96 is adapted to be hand held by a technician. The test set includes input keypad region 98 having multiple keys, including telephone number keypad portions, and various control and operation keys, scroll keys and the like. A bitmap or graphic display 100 provides display of operational information and results. Microphone 102 and speaker 104 enable the technician to speak and listen to use the device as a telephone. Cables connect alligator clips and modular plugs (not shown) to the test set to enable connection to telephone wiring of the phone systems under test.

A TDR test key 106 is provided in the keypad region 98, wherein the test set operates upon one press of the TDR key 106 to perform diagnostic testing of line opens and shorts for non-operational phone connections based on the single button press of key 106, performs the TDR testing process and reports results, as in FIG. 4, for example.

Further, the TDR button press may also provide one button line qualification on a test set phone, to provide automatic detection of active line usage for data, phone, or open-short conditions, for example in accordance with the steps of FIG. 5.

Additionally, pressing TDR button 106 may provide one button line qualification on the test set 96, by providing automatic detection of active line usage for data, phone, number verification or open-short conditions in accordance with FIG. 6.

The various tests provided with the one button press may be altered by configuration options of the device, or provided as separate versions of test instruments, for varying user needs and budgets.

In accordance with the device and method herein, TDR tests allow the unit to test telephone circuits for line lengths to opens, shorts and bridge taps. A one button press test is provided, for ease of use and testing.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A hand held test instrument for testing a phone line, comprising:
an interface for connection with a phone line under test;
a keypad for providing phone key and operation control functions;
a processor; and
a TDR test circuit for providing TDR testing in conjunction with said processor.

2. The hand held test instrument for testing phone lines according to claim 1, wherein said phone test set comprises a hand held 'butt set'.

3. The hand held test instrument for testing phone lines according to claim 1, wherein said TDR test circuit and processor cooperate to provide measurement of distance in the phone line to an open.

4. The hand held test instrument for testing phone lines according to claim 1, wherein said TDR test circuit and processor cooperate to provide measurement of distance in the phone line to an short.

5. The hand held test instrument for testing phone lines according to claim 1, wherein said TDR test circuit and processor cooperate to provide measurement of distance in the phone line to a bridge tap.

6. The hand held test instrument for testing phone lines according to claim 1, further comprising a key of said keypad comprising a one button test activation button to activate testing by the test instrument.

7. The hand held test instrument for testing phone lines according to claim 6, wherein activating said one button performs the TDR testing process.

8. The hand held test instrument for testing phone lines according to claim 6, wherein activating said one button performs detection of active line usage for data, phone, or open-short conditions.

9. The hand held test instrument for testing phone lines according to claim 6, wherein activating said one button performs detection of active line usage for data, phone, number verification or open-short conditions.

10. A method of providing a phone test set for a phone line under test, comprising:
providing a TDR measurement module;
operating said TDR measurement module to provide stimulus to the phone line under test and measure response thereto; and
reporting the results of said measure.

11. The method according to claim 10, further comprising the steps of:
determining whether voltage or data are present on the line under test before operating said TDR measurement module to provide stimulus, and if voltage or data are present, not providing stimulus and measure and reporting.

12. The method according to claim 11, further comprising reporting if it is determined that voltage or data are present.

13. The method according to claim 10, further comprising the steps of:
determining whether an ANAC number is provided, and if dial tone is present on the line under test before operating said TDR measurement module to provide stimulus, and if voltage or data are present and an ANAC number is provided, calling the ANAC number and reporting results thereof.

14. The method according to claim 10, further comprising providing said phone test set as a hand held device.

15. The method according to claim 10, further comprising:
activating said step of operating said TDR measurement module to provide stimulus to the phone line under test and measure response thereto in response to activation of a single test activation button on said instrument.

16. The method according to claim 10, wherein activating said one button performs the TDR testing process.

17. The method according to claim 10, wherein activating said one button performs detection of active line usage for data, phone, or open-short conditions.

18. The method according to claim 10, wherein activating said one button performs detection of active line usage for data, phone, number verification or open-short conditions.
